# EUROPÄISCHE PATENTANMELDUNG

(11) **EP 1 986 315 A2**
(43) Veröffentlichungstag der Anmeldung: **29.10.2008**
(21) Anmeldenummer: 08103515.6
(22) Anmeldetag: 14.04.2008
(51) Int. Cl.: H02M 7/48, H02M 1/32

(54) **Verfahren zur Begrenzung eines durch eine Ausgangsstufe eines Wechselrichters fliessenden Stromes**

(30) Priorität: 26.04.2007 AT 6542007
(71) Anmelder: Siemens Aktiengesellschaft Österreich, 1210 Wien (AT)
(72) Erfinder: Hallak, Jalal, 1220, Wien (AT)
(74) Vertreter: Maier, Daniel Oliver

(57) **Zusammenfassung**

Die Erfindung betrifft ein Verfahren zur Begrenzung eines durch eine Ausgangsstufe (2) eines Wechselrichters fließenden Stromes (I_{AC}), wobei die Polarität des Stromes (I_{AC}) im störungsfreien Betrieb mittels in der Ausgangsstufe (2) angeordneter Schaltelemente (S1, S2, S3, S4) abhängig von der Polarität der Netzspannung (U_{Netz}) eines Wechselspannungsnetzes umgeschaltet wird und wobei für den Strom (I_{AC}) eine positive und eine negative Referenz (+I_{Ref}, -I_{Ref}) vorgegeben wird, bei deren Erreichung Schutzmaßnahmen ausgelöst werden, wobei des Weiteren einer positiven Halbwelle der Netzspannung (U_{Netz}) die negative Referenz (-I_{Ref}) herabgesetzt wird und wobei während einer negativen Halbwelle der Netzspannung (U_{Netz}) die positive Referenz (+I_{Ref}) herabgesetzt wird.

## Beschreibung

Die Erfindung betrifft ein Verfahren zur Begrenzung eines durch eine Ausgangsstufe eines Wechselrichters fliesenden Stromes, wobei die Polarität des Stromes im störungsfreien Betrieb mittels in der Ausgangsstufe angeordneter Schaltelemente abhängig von der Polarität der Netzspannung eines Wechselspannungsnetzes umgeschaltet wird und wobei für den Strom eine positive und eine negative Referenz vorgegeben wird, bei deren Erreichung Schutzmaßnahmen ausgelöst werden.

Wechselrichter dienen der Umwandlung von Gleichstrom in Wechselstrom, beispielsweise um Strom aus alternativen Energiequellen wie Photovoltaikanlagen in ein Wechselspannungsnetz einzuspeisen. In der Regel umfasst der Wechselrichter einen Wandler (z.B. Sperrwandler oder Tiefsetzsteller) zur Erzeugung eines sinusförmigen Stromes und eine Ausgangsstufe zur Umschaltung der Polarität. Eine derartige Ausgangsstufe ist beispielsweise als sogenannte H-Brücke mit vier Schaltelementen ausgeführt, welche im störungsfreien Betrieb die Polarität des einzuspeisenden Stromes synchron zur Polarität der Netzspannung umschalten.

Wechselspannungsnetze sind in der Regel störungsbehaftet. Beispielsweise kann es durch Netzüberlastung oder Kurzschlüsse zu Überströmen im Netz kommen, welche ohne Schutzmaßnahmen zur Zerstörung der Schaltelemente in der Ausgangsstufe führen. Überströme in der Ausgangsstufe treten auch dann auf, wenn die Netzspannung während einer positiven Halbwelle in negativer Richtung oder während einer negativen Halbwelle in positiver Richtung einbricht.

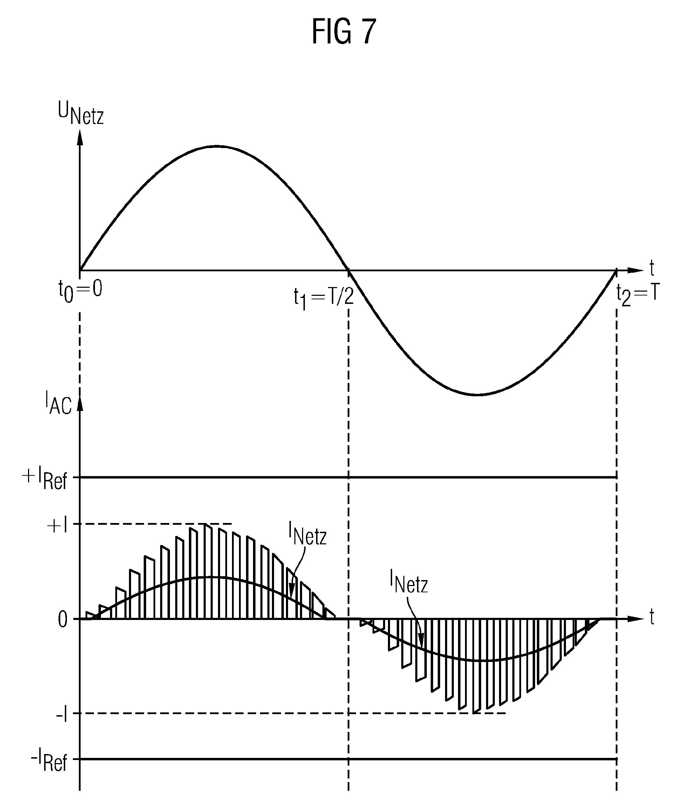

Um die Schaltelemente zu schützen, werden für den Strom in der Ausgangsstufe deshalb zwei symmetrische Referenzen, d.h. eine positive und eine negative konstante Referenz mit gleichem Betrag, festgelegt. Die Referenzbeträge sind dabei höher als die Werte der maximalen Stromspitzen in der Ausgangsstufe bei ungestörtem Betrieb, wobei zu beachten ist, dass z.B. bei Sperrwandlern die Stromspitzen in der Ausgangsstufe höher sind als der Scheitelwert des effektiven Stromes im Netz (vgl. Fig. 7). Überschreitet der Strom eine Referenz, werden Schutzmaßnahmen ausgelöst, z.B. erfolgt durch geeignete Einrichtungen eine Trennung der Ausgangsstufe vom Netz bzw. eine Abschaltung des Wechselrichters.

Neben den durch das Wechselspannungsnetz hervorgerufenen Überströmen kann es auch durch fehlerhaftes Umschalten der Schaltelemente in der Ausgangsstufe zu Überströmen kommen.

Die Umschaltzeitpunkte werden in der Regel mittels eines Nulldurchgangssignals bestimmt, welches vom Verlauf der Netzspannung mit bekannten Verfahren abgeleitet wird. Dabei kann es zu Fehlern kommen, infolge derer das Nulldurchgangssignal nicht mehr die tatsächlichen Nulldurchgänge der Netzspannung anzeigt. Auslöser für derartige Fehler können Störungen im Wechselspannungsnetz oder elektromagnetisch Störungen im Bereich einer Messanordnung zur Nulldurchgangserkennung sein.

Ein fehlerbehaftetes Nulldurchgangssignal führt zu einem Kurzschluss in der Ausgangsstufe eines Wechselrichters, weil die Schaltelemente in der Ausgangsstufe nicht zum Zeitpunkt des tatsächlichen Nulldurchgangs der Netzspannung, also nicht spannungsfrei umschalten. Beispielsweise durchläuft die Netzspannung noch eine positive Halbwelle, während die Ausgangsstufe bereits auf negative Polarität umschaltet.

Dabei genügen bereits kleine zeitliche Abweichungen von den tatsächlichen Nulldurchgängen, um massive Kurzschlüsse hervorzurufen. Der Kurzschlussstrom fließt dann in falscher Richtung durch die Ausgangsstufe, beispielsweise durch Bodydioden der als Schalttransistoren ausgebildeten Schaltelemente. Diese sind in der Regel nicht für höhere Ströme ausgelegt und werden infolgedessen zerstört.

Derart verursachte Kurzschlussströme steigen sehr schnell an, sodass der Zeitraum vom Ansprechen einer Schutzeinrichtung infolge Erreichung einer Referenz bis zur Abschaltung des Wechselrichters zu lange dauert, um die Schaltelemente zu schützen.

Der Erfindung liegt deshalb die Aufgabe zugrunde, für ein Verfahren der eingangs genannten Art eine Verbesserung gegenüber dem Stand der Technik anzugeben.

Erfindungsgemäß wird diese Aufgabe gelöst durch ein Verfahren zur Begrenzung eines durch eine Ausgangsstufe eines Wechselrichters fliesenden Stromes, wobei die Polarität des Stromes im störungsfreien Betrieb mittels in der Ausgangsstufe angeordneter Schaltelemente abhängig von der Polarität der Netzspannung eines Wechselspannungsnetzes umgeschaltet wird und wobei für den Strom eine positive und eine negative Referenz vorgegeben wird, bei deren Erreichung Schutzmaßnahmen ausgelöst werden und wobei des Weiteren während einer positiven Halbwelle der Netzspannung die negative Referenz herabgesetzt wird und wobei während einer negativen Halbwelle der Netzspannung die positive Referenz herabgesetzt wird.

Die positive Referenz während einer negativen Halbwelle der Netzspannung und die negative Referenz während einer positiven Halbwelle werden dabei soweit herabgesetzt, dass bei einer fehlerhaften Umpolung der Ausgangsstufe der Kurzschlussstrom bei Erreichung der herabgesetzten Referenz noch so gering ist, dass genügend Zeit zur Aktivierung von Schutzmaßnahmen bleibt, bevor ein Bauelement in der Ausgangsstufe Schaden nimmt. Somit können die Bauelemente auch gegen stark ansteigende Kurzschlussströme infolge fehlerhafter Umschaltungen der Polarität wirkungsvoll geschützt werden.

In einer vorteilhaften Ausprägung werden für die herabgesetzten Referenzen zumindest geringere Werte als die im störungsfreien Betrieb erreichten Scheitelwerte des Stromes am Ausgang der Ausgangsstufe vorgegeben. Beispielsweise werden die positive Referenz während einer negativen Halbwelle der Netzspannung und die negative Referenz während einer positiven Halbwelle bis nahe Null herabgesetzt. Schutzmaßnahmen werden dann unmittelbar nach einer fehlerhaften Umpolung des Stromes bei Erreichung einer herabgesetzten Referenz aktiviert. Die während der positiven Halbwelle der Netzspannung herabgesetzte negative Referenz verhindert somit das Ansteigen eines negativen Kurzschlussstromes und die während der negativen Halbwelle der Netzspannung herabgesetzte positive Referenz verhindert das Ansteigen eines positiven Kurzschlussstromes in der Ausgangsstufe.

In einer einfachen Ausprägung werden für die herabgesetzten Referenzen konstante minimale Referenzwerte vorgegeben. Es kann jedoch auch sinnvoll sein, für die herabgesetzten Referenzen variable Verläufe vorzugeben, z.B. um das Ansprechverhalten der Schutzeinrichtungen in verschiedenen Abschnitten einer Netzspannungsperiode zu variieren.

Eine weitere Ausprägung der Erfindung sieht vor, dass während der positiven Halbwelle der Netzspannung für die positive Referenz ein variabler Verlauf vorgegeben wird und dass währen der negativen Halbwelle der Netzspannung für die negative Referenz ein variabler Verlauf vorgegeben wird. Während einer Netzspannungshalbwelle wird demnach nicht nur die Referenz herabgesetzt, deren Polarität ungleich der Polarität des fehlerfreien Stromes ist, sondern es wird auch die Referenz, deren Polarität mit der des fehlerfreien Stromes übereinstimmt, variabel vorgegeben.

Das hat den Vorteil, dass die Referenz, deren Polarität mit der des fehlerfreien Stromes übereinstimmt, mit gleichbleibender Toleranz über dem fehlerfreien Strom in der Ausgangsstufe vorgegeben wird. Die Schutzmaßnahmen sprechen dann während einer Netzspannungshalbwelle unabhängig von Auftretungszeitpunkt einer Störung gleich schnell an.

Dabei ist es von Vorteil, wenn für die variablen Verläufe der Referenzen Halbsinusfunktionen mit maximalen Referenzwerten in den Scheitelpunkten der Netzspannung vorgegeben werden. Der Verlauf kann dann zum Beispiel in einfacher Weise von den Halbwellen der Netzspannung abgeleitet werden oder synchron zum Verlauf der Netzspannung künstlich mittels eines Mikrocontrollers erzeugt werden.

Vorteilhaft ist es des Weiteren, wenn die variablen Verläufe der Referenzen proportional zur Leistung durch die Ausgangsstufe vorgegeben werden. Besonders bei der Einspeisung von Strom aus alternativen Energiequellen ist die Leistung großen Schwankungen unterworfen. Durch die Anpassung der Referenzverläufe an die Leistung durch die Ausgangsstufe wird erreicht, dass die Ansprechtoleranz von Schutzmaßnahmen entsprechend angepasst wird.

Eine einfache Ausprägung für den Verlauf der Referenzen über eine ganze Netzspannungsperiode sieht vor, dass für die positive Referenz ein Verlauf vorgegeben wird, der während einer negativen Halbwelle der Netzspannung einen minimalen positiven Referenzwert annimmt und der während einer positiven Halbwelle der Netzspannung einer positiven Halbsinusfunktion mit Anfangs- und Endwert gleich dem minimalen positiven Referenzwert folgt und dass für die negative Referenz ein Verlauf vorgegeben wird, der während einer positiven Halbwelle der Netzspannung einen minimalen negativen Referenzwert annimmt und der während einer negativen Halbwelle der Netzspannung einer negativen Halbsinusfunktion mit Anfangs- und Endwert gleich dem minimalen negativen Referenzwert folgt. Die Referenzen bewirken dann über eine ganze Netzspannungsperiode gleichbleibendes Ansprechverhalten der Schutzeinrichtungen.

Die Erfindung wird nachfolgend in beispielhafter Weise unter Bezugnahme auf die beigefügten Figuren erläutert. Es zeigen in schematischer Darstellung:
- Fig. 1: Wechselrichter mit als Brückenschaltung ausgebildeter Ausgangsstufe
- Fig. 2: Wechselrichter gemäß Fig. 1 mit eingezeichnetem Stromfluss während einer positiven Halbwelle der Netzspannung im störungsfreien Betrieb
- Fig. 3: Wechselrichter gemäß Fig. 1 mit eingezeichnetem Stromfluss während einer negativen Halbwelle der Netzspannung im störungsfreien Betrieb
- Fig. 4: Wechselrichter gemäß Fig. 1 mit Stromfluss im Falle einer falschen Nulldurchgangserkennung während einer positiven Halbwelle der Netzspannung
- Fig. 5: Wechselrichter gemäß Fig. 1 mit Stromfluss im Falle einer falschen Nulldurchgangserkennung während einer negativen Halbwelle der Netzspannung
- Fig. 6: Verlauf der Netzspannung und des Stromes am Ausgang der Ausgangsstufe vor und nach der Filterung bei einem Wechselrichter mit Tiefsetzsteller mit zwei symmetrischen Referenzen, d.h. einer positiven und einer negativen konstanten Referenz mit gleichem Betrag
- Fig. 7: Verlauf der Netzspannung und des Stromes am Ausgang der Ausgangsstufe vor und nach der Filterung bei einem Wechselrichter mit Sperrwandler mit zwei symmetrischen Referenzen, d.h. einer positiven und einer negativen konstanten Referenz mit gleichem Betrag
- Fig. 8: Verlauf der Netzspannung und des Stromes am Ausgang der Ausgangsstufe mit Spannungseinbruch in der positiven bzw. der negativen Halbwelle nach dem Stand der Technik
- Fig. 9: Verlauf der Netzspannung und des Stromes am Ausgang der Ausgangsstufe mit falscher Nulldurchgangserkennung in der positiven bzw. der negativen Halbwelle nach dem Stand der Technik
- Fig. 10: Verlauf der Netzspannung und des Stromes am Ausgang der Ausgangsstufe mit falscher Nulldurchgangserkennung in der positiven bzw. der negativen Halbwelle bei Anwendung des erfindungsgemäßen Verfahrens
- Fig. 11: Verlauf der Netzspannung und des Stromes am Ausgang der Ausgangsstufe und variabler Verlauf der Referenzen
- Fig. 12: Verlauf der Netzspannung und des Stromes am Ausgang der Ausgangsstufe und variabler, proportional zur Leistung durch die Ausgangsstufe vorgegebener Verlauf der Referenzen

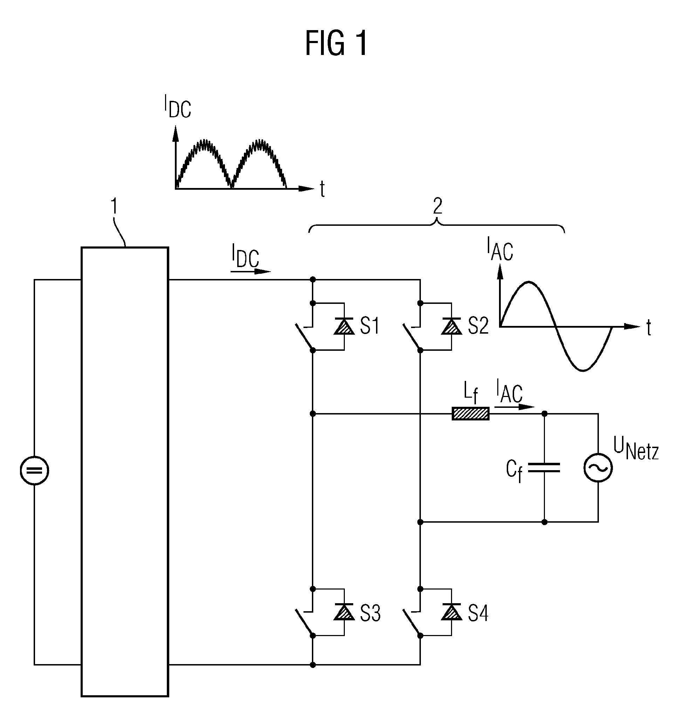

Die Figuren 1 bis 5 stellen schematische Blockschaltbilder eines beispielhaften Wechselrichters dar, mit dem das erfindungsgemäße Verfahren durchführbar ist. Dabei ist ein DC-DC Wandler 1 eingangsseitig an eine Gleichstromquelle angeschaltet. Der Wandler 1 ist z.B. als Tiefsetzsteller, Sperrwandler oder Gegentaktwandler ausgebildet und liefert am Ausgang einen ungeglätteten, pulsierenden Strom I_{DC}. Mittels nachgeschalteter Ausgangsstufe 2 wird jede zweite Halbwelle des pulsierenden Stromes I_{DC} invertiert, sodass am Ausgang ein sinusförmiger Wechselstrom I_{AC}, vorzugsweise geglättet mittels einer Drossel L_{f} und eines Kondensators C_{f} in ein Wechselspannungsnetz eingespeist werden kann.

Die Ausgangsstufe 2 ist dabei als beispielhafte H-Brücke ausgebildet, umfassend vier Schaltelementen S1, S2, S3 und S4 mit Bodydioden. Zusätzlich sind in den Figuren 1 bis 5 die Stromverläufe I_{DC} bzw. I_{AC} über der Zeit t am Ausgang des Wandlers 1 und am Ausgang der Ausgangsstufe 2 dargestellt.

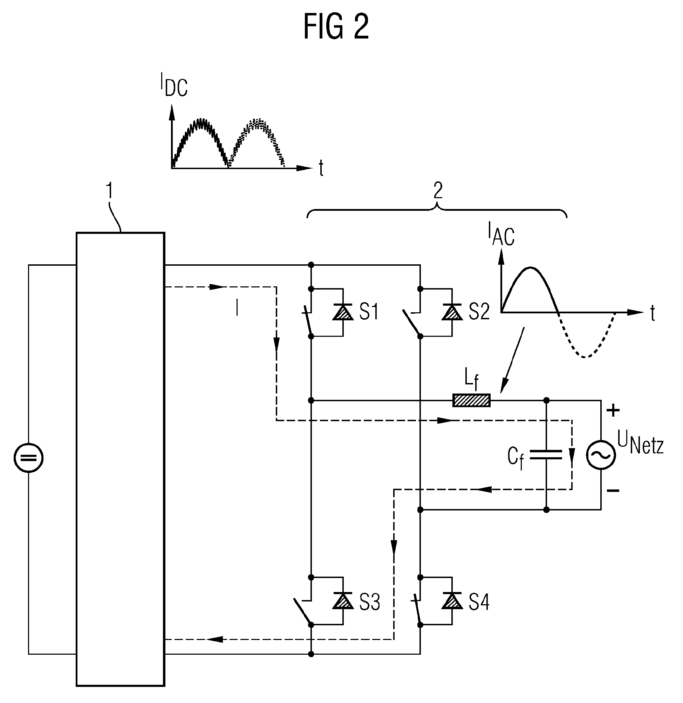

In Figur 2 ist die Schaltstellung der Schaltelemente S1, S2, S3 und S4 der Ausgangsstufe 2 während einer positiven Halbwelle der Netzspannung U_{Netz} dargestellt. Der eingezeichnete Stromfluss I verläuft vom ersten Ausgang des Wandlers 1 durch das erste Schaltelement S1 der Ausgangsstufe 2, durch die Drossel L_{f} in das Wechselspannungsnetz und weiter über das vierte Schaltelement S4 der Ausgangsstufe 2 zurück zum zweiten Ausgang des Wandlers 1.

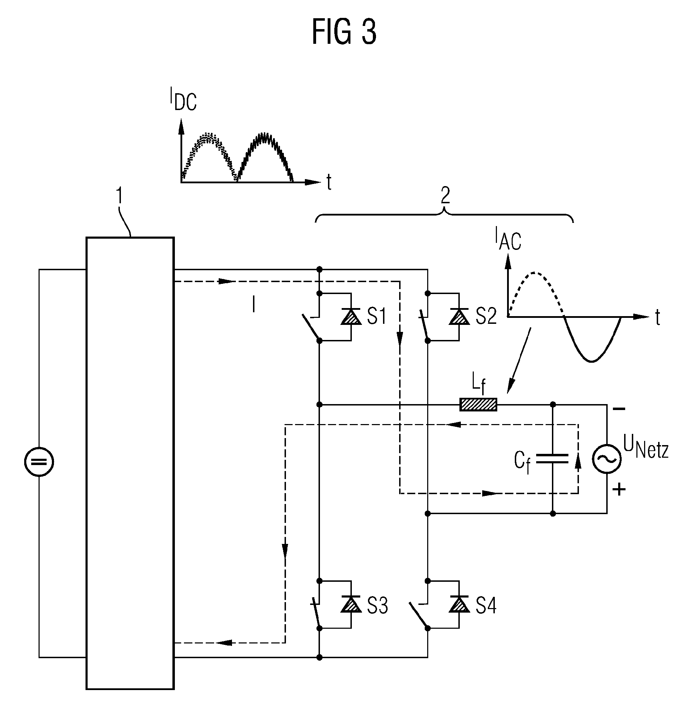

In Figur 3 ist die Schaltstellung der Schaltelemente S1, S2, S3 und S4 der Ausgangsstufe 2 während einer negativen Halbwelle der Netzspannung U_{Netz} dargestellt. Dabei verläuft der Stromfluss I vom ersten Ausgang des Wandlers 1 über das zweite Schaltelement 2 in das nunmehr umgepolte Wechselspannungsnetz und weiter über die Drossel L_{f} und das dritte Schaltelement 3 zurück zum zweiten Ausgang des Wandlers 1.

Die Schaltelemente bilden demnach zwei Paare, bestehend aus erstem und viertem Schaltelement S1 und S4 und aus zweitem und drittem Schaltelement S2 und S3, welche bei jedem Nulldurchgang der Netzspannung U_{Netz} umgeschaltet werden.

Die Ansteuerung der Schaltelemente S1, S2, S3 und S4 erfolgt in der Regel in Abhängigkeit eines Nulldurchgangssignals, welches durch eine geeignete Messanordnung aus der Netzspannung U_{Netz} abgeleitet wird. Eine derartige Messanordnung umfasst beispielsweise einen Spannungsteiler mit nachgeschaltetem Operationsverstärker oder Komparator zur Auswertung der Polarität der am Spannungsteiler anliegenden Netzspannung U_{Netz}. Der Eingang eines solchen Operationsverstärkers bzw. eines Komparators ist dabei hochohmig, um die Verluste durch die Messanordnung gering zu halten. Das führt zum Nachteil, dass elektromagnetische Störungen am Eingang des Operationsverstärkers fehlerhafte Polaritätswechsel hervorrufen. Das Nulldurchgangssignal zeigt dann nicht mehr die tatsächlichen Nulldurchgänge der Netzspannung U_{NETZ} an.
Auch Störungen im Netz oder andere Fehlerquellen können zu einem fehlerhaften Nulldurchgangssignal führen.

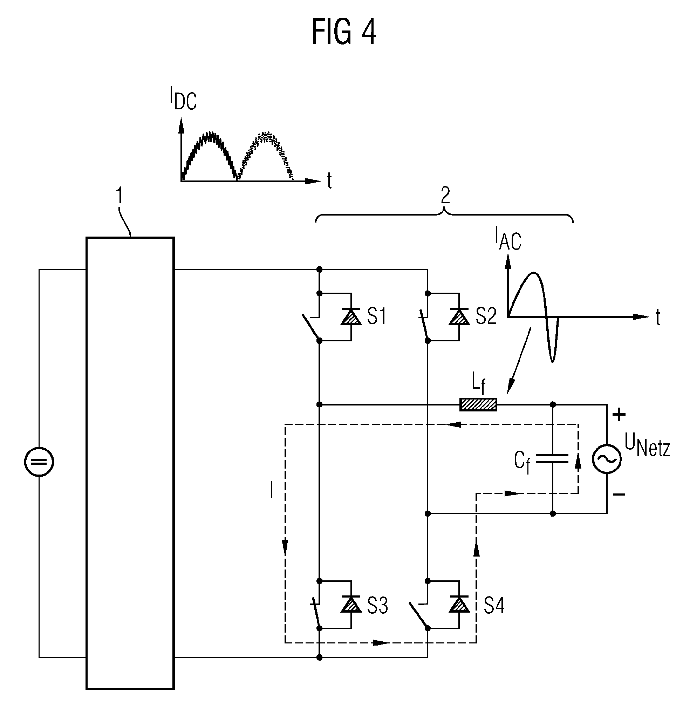

Figur 4 zeigt den Stromfluss I durch die Ausgangsstufe 2 für den Fall, dass die Schaltelementpaare S1, S4 bzw. S2, S3 infolge eines falschen Nulldurchgangssignals während einer positiven Halbwelle der Netzspannung U_{Netz} umgeschaltet werden. Es entsteht ein Kurzschluss mit einem rasch ansteigenden, negativen Kurzschlussstrom, welcher aus dem Wechselstromnetz über die Drossel L_{f}, das eingeschaltete dritte Schaltelement S3 und die Bodydiode des vierten Schaltelements S4 zurück in das Wechselstromnetz fließt. Der Kurzschlussstrom steigt dabei so schnell an, dass vom Erreichen einer fixe Referenz nach dem Stand der Technik bis zum Auslösen einer Schutzmaßnahme (z.B. Trennung vom Netz) zu wenig Zeit bleibt, um beispielsweise die für hohe Ströme ungeeignete Bodydiode zu schützen.

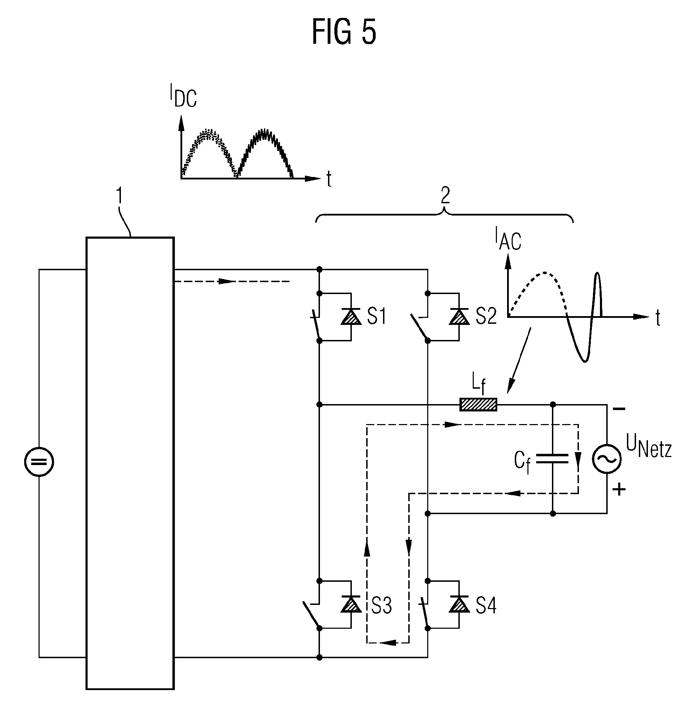

Dasselbe Problem tritt auf, wenn eine fehlerhafte Umschaltung in der Ausgangsstufe während der negativen Halbwelle der Netzspannung U_{Netz} erfolgt. Dann fließt ein rasch ansteigender positiver Kurzschlussstrom durch die Ausgangsstufe 2. Dieser Fall ist in Figur 5 dargestellt.

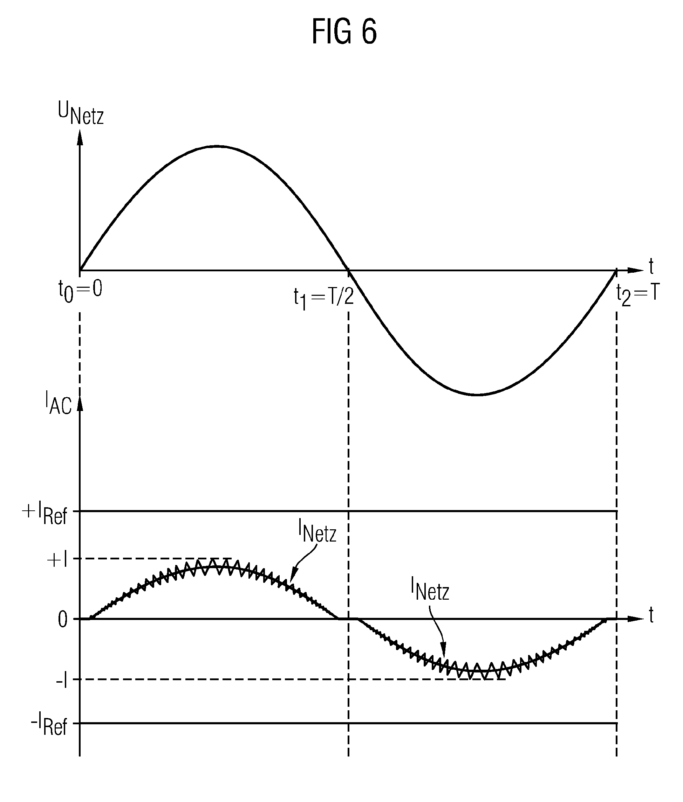

Die Figuren 6 bis 12 zeigen den Verlauf des Stromes I_{AC} am Ausgang der Ausgangsstufe 2 über der Zeit t in Bezug auf den Verlauf der Netzspannung U_{Netz} über der Zeit t für verschiedene Fälle. Dabei ist eine Periode mit der Periodendauer T der Netzspannung U_{Netz} dargestellt, beginnend mit einer positiven Sinushalbwelle vom Periodenbeginn t₀ bis zum Nulldurchgang t₁ nach der halben Periodendauer T/2 und mit einer darauffolgenden negativen Sinushalbwelle bis zum Periodenende t₂.

Figur 6 zeigt den ungeglätteten Strom I_{AC} und den geglätteten Netzstrom I_{Netz} für einen Wechselrichter mit Tiefsetzsteller als Wandler 1. Die Maximalwerte des Stromes +Î, -Î im störungsfreien Betrieb werden durch die Spitzen des gezackten Stromes I_{AC} in den Scheitelpunkten gebildet. Nach dem Stand der Technik sind symmetrische Referenzen +I_{Ref}, -I_{Ref} vorgesehen, deren konstante Beträge größer als die Maximalwerte des Stromes +Î, -Î sind.

Dasselbe gilt für symmetrische Referenzen +I_{Ref}, -I_{Ref} nach dem Stand der Technik für den Beispielsfall, dass der Wechselrichter einen Sperrwandler als Wandler 1 umfasst. Die entsprechenden Verläufe des ungeglätteten Stromes I_{AC} am Ausgang der Ausgangsstufe 2 und des Netzstromes I_{Netz} sind in Figur 7 dargestellt. Die unterbrochene Arbeitsweise des Sperrwandlers führt jedoch dazu, dass die Maximalwerte des Stromes +Î, -Î in den Scheitelpunkte annähernd doppelt so groß sind wie die Scheitelwerte des Netzstromes I_{Netz}. Demnach müssen symmetrische Referenzen +I_{Ref}, -I_{Ref} nach dem Stand der Technik so gewählt werden, dass diese Maximalwerte des Stromes +Î, -Î nicht zur Auslösung der Schutzmaßnahmen führen.

Im störungsfreien Betrieb erfolgt die Umschaltung der Ausgangsstufe 2 im Nulldurchgang t₁ der Netzspannung U_{Netz}, wobei zur Vermeidung von Kurzschlüssen im Bereich des Nulldurchgangs t₁ eine kurzzeitige Abschaltung aller Schaltelemente S1, S2, S3 und S4 vorgesehen ist.

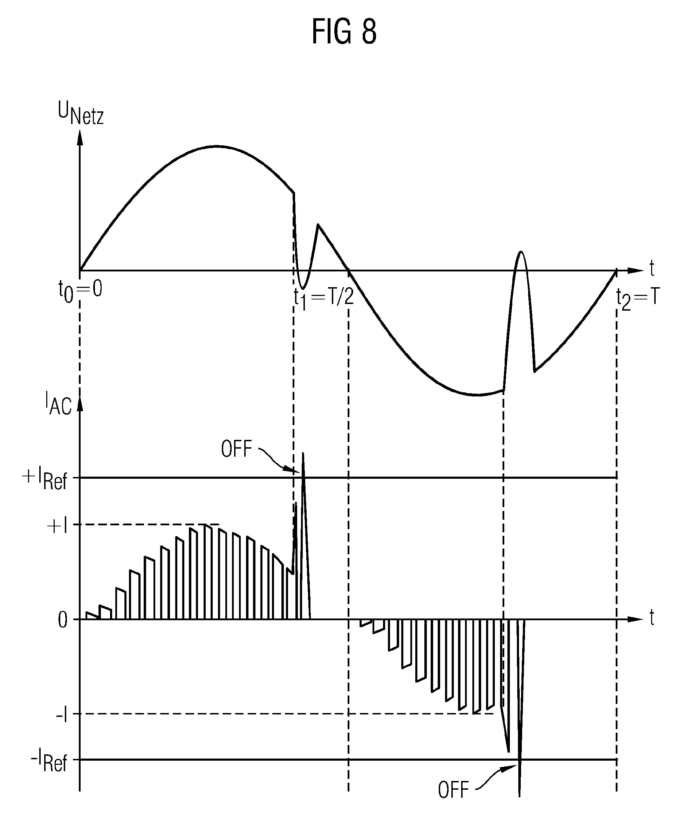

Die symmetrischen Referenzen +I_{Ref}, -I_{Ref} nach dem Stand der Technik führen bei Einbrüchen der Netzspannung U_{NETZ} zur Auslösung von Schutzmaßnahmen, z.B. erfolgt ein Ausschaltvorgang OFF des Wechselrichters. Der entsprechende Stromverlauf am Ausgang der Ausgangsstufe ist in Figur 8 dargestellt. Wenn die Netzspannung U_{Netz} während einer positiven Halbwelle in negativer Richtung einbricht oder eine Überlast bzw. ein Kurzschluss am Netz auftritt, steigt der Strom I_{AC} in der Ausgangsstufe 2 stark an, bis die positive Referenz +I_{Ref} erreicht ist und die Schutzmaßnahmen eingeleitet werden. Aufgrund unvermeidlicher Verzögerungen in der Schaltungsanordnung steigt der Überstrom noch weiter an, bis der Wechselrichter tatsächlich abgeschaltet ist.

Der gleiche Effekt mit umgekehrten Vorzeichen tritt auf, wenn die Netzspannung U_{Netz} während der negativen Halbwelle in positiver Richtung einbricht oder eine Überlast bzw. ein Kurzschluss am Netz auftritt. Der dargestellte getaktete Strom ist auf die Arbeitsweise eines Sperrwandlers zurückzuführen. Die beschriebenen Effekte treten jedoch auch bei Tiefsetzstellern oder anderen geeigneten Wandlern 1 mit z.B. gezacktem Stromverlauf auf.

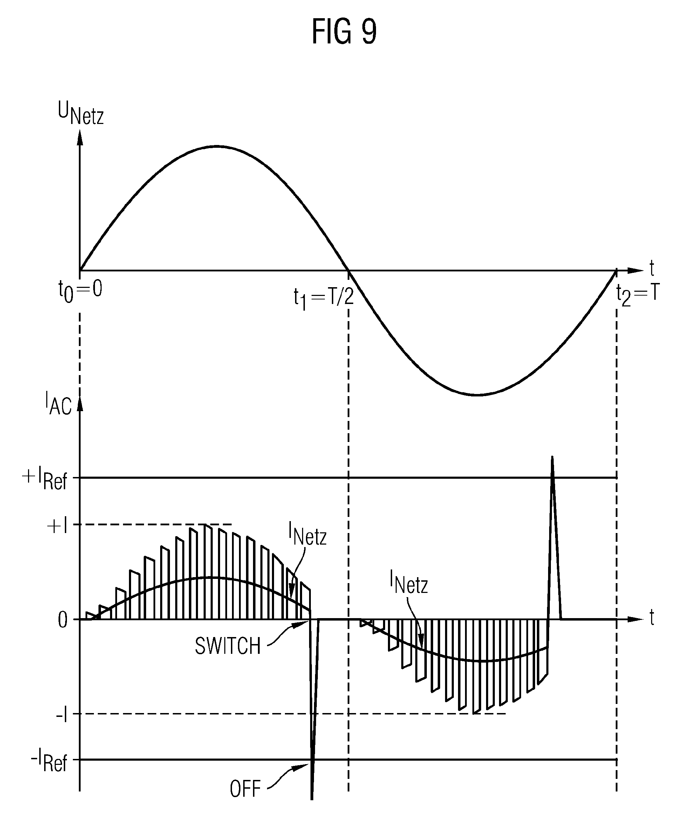

Der Verlauf der Ströme im Falle falscher Nulldurchgangserkennung ist in Figur 9 dargestellt. Der Strom I_{AC} in der Ausgangsstufe ist beispielsweise als getakteter Strom eines Sperrwandlers ausgebildet (ebenso kann ein Tiefsetzsteller oder ein anderer geeigneter Wandler zum Einsatz kommen). Erfolgt vor Erreichung des Nulldurchgangs t₁ eine Umpolung SWITCH der Ausgangsstufe 2, entsteht wie in Figur 4 dargestellt ein Kurzschluss. Der Netzstrom I_{Netz} fließt als Kurzschlussstrom durch das eingeschaltete dritte Schaltelement S3 und die Bodydiode des vierten Schaltelements S4 und steigt aufgrund der anliegenden Netzspannung U_{Netz} ungleich Null sehr stark an. Die symmetrischen Referenzen +I_{Ref}, -I_{Ref} nach dem Stand der Technik bewirken zwar, dass Schutzmaßnahmen ausgelöst werden. In der Regel führen jedoch die Verzögerungen bis zur tatsächlichen Abschaltung des Wechselrichters dazu, dass die Abschaltung OFF des Wechselrichters erst zu einem Zeitpunkt erfolgt, zu dem der Kurzschlussstrom unzulässig hohe Werte erreicht hat. Eine Beschädigung bzw. Zerstörung der Bauteile in der Ausgangsstufe 2 ist die Folge. Der gleiche Effekt tritt mit umgekehrten Vorzeichen auf, wenn während der negativen Halbwelle der Netzspannung U_{Netz} eine fehlerhafte Umpolung der Ausgangsstufe 2 erfolgt.

Diese negativen Effekte einer schaltungstechnisch bedingten Verzögerungen bei der Ausführung einer Schutzmaßnahme - von der Auslösung, wenn der Strom in der Ausgangsstufe 2 eine Referenz +I_{Ref}, -I_{Ref} erreicht, bis zur tatsächlichen Abschaltung des Wechselrichters - werden durch das erfindungsgemäße Verfahren vermieden.

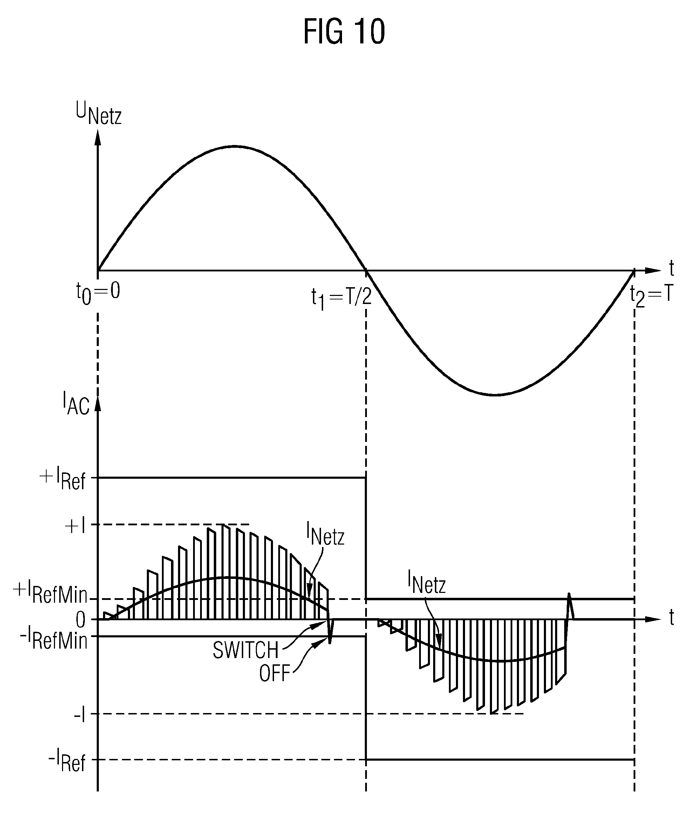

In Figur 10 ist der Verlauf der Ströme für eine erste Ausprägung der Erfindung dargestellt. Es wird der gleiche Fall falscher Nulldurchgangserkennung behandelt, der auch den in Figur 9 dargestellten Verläufen mit symmetrischen Referenzen +I_{Ref}, -I_{Ref} nach dem Stand der Technik zugrunde liegt.

Im Unterschied zum Verfahren nach dem Stand der Technik sind die Referenzen +I_{Ref}, -I_{Ref} nicht mehr über die gesamte Periode konstant. Erfindungsgemäß ist während einer positiven Halbwelle der Netzspannung U_{Netz} die negative Referenz -I_{Ref} bis zu einem minimalen negativen Referenzwert -I_{Ref Min} herabgesetzt. Ebenso ist während einer negativen Halbwelle der Netzspannung U_{Netz} die positive Referenz +I_{Ref} bis zu einem minimalen positiven Referenzwert +I_{Ref Min} herabgesetzt. Dabei definieren der Periodenbeginn t₀, der Nulldurchgang t₁ und das Periodenende t₂ einer Netzspannungsperiode jene Zeitpunkte, zu denen die entsprechende Referenz +I_{Ref} bzw. -I_{Ref} auf ihren minimalen Referenzwert +I_{Ref Min} bzw. -I_{Ref Min} herabgesetzt wird, beispielsweise durch Umschaltung mittels Logikelement.

Im Falle einer fehlerhaften Umpolung SWITCH der Ausgangsstufe 2 entsteht wieder ein Kurzschluss, wie in Fig. 4 für die positive Halbwelle und in Fig. 5 für die negative Halbwelle dargestellt. Der Kurzschlussstrom erreicht jedoch keine für die Bauteile der Ausgangsstufe 2 kritischen Werte, da erfindungsgemäß bereits bei Erreichung der minimalen Referenzwerte +I_{Ref Min}, -I_{Ref Min} Schutzmaßnahmen ausgelöste werden und genügend Zeit bis zur tatsächlichen Abschaltung des Wechselrichters bleibt.

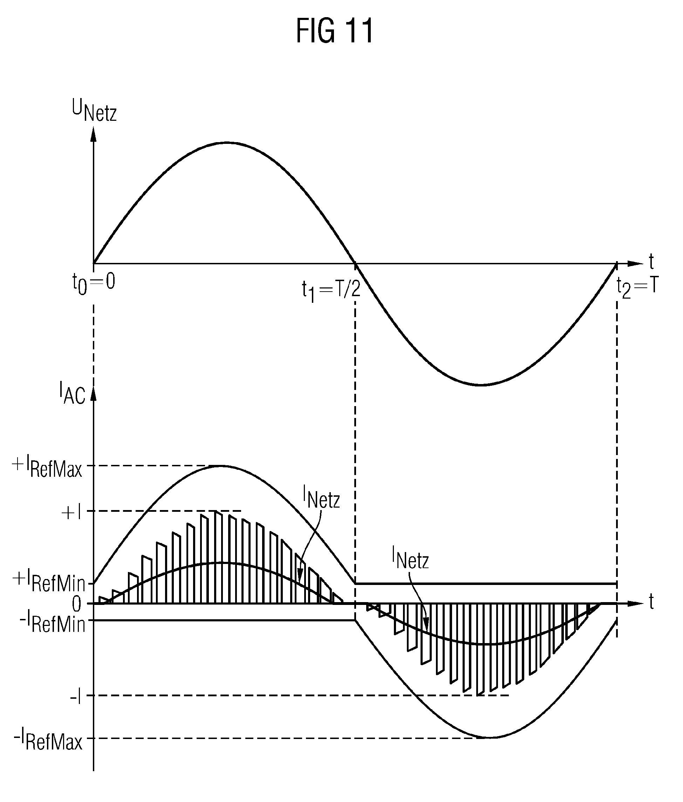

Den Verlauf der Ströme und Referenzen für eine verbesserte Ausprägung der Erfindung ist in Figur 11 dargestellt. Dabei ist beispielhaft wieder ein getakteter Strom I_{Ac} eines Sperrwandlers dargestellt (ebenso kann ein Tiefsetzsteller oder ein anderer geeigneter Wandler 1 zum Einsatz kommen). Die negative Referenz -I_{Ref} ist wieder während einer positiven Halbwelle der Netzspannung U_{Netz} auf den minimalen negativen Referenzwert -I_{Ref Min} herabgesetzt und die positive Referenz +I_{Ref} ist wieder während einer negativen Halbwelle der Netzspannung U_{Netz} auf den minimalen positiven Referenzwert +I_{Ref Min} herabgesetzt.

Die positive Referenz +I_{Ref} ist während einer positiven Halbwelle der Netzspannung U_{Netz} variabel und folgt einer Halbsinusfunktion mit einem maximalen positiven Referenzwert +I_{Ref Max} im Scheitelpunkt. Ebenso ist die negative Referenz -I_{Ref} während einer negativen Halbwelle der Netzspannung U_{Netz} variabel und folgt einer Halbsinusfunktion mit einem maximalen negativen Referenzwert -I_{Ref Max} im Scheitelpunkt.

Zum Beispiel wird die Sinusfunktion in einfacher Weise aus dem Verlauf der Netzspannung U_{Netz} abgeleitet. Das ist vor allem dann vorteilhaft, wenn die Referenzen als Spannungen vorgegeben werden und auch der Messwert des Stromes als Spannung vorliegt, beispielsweise durch Messung des Stromes mittels eines Stromwandlers, welcher einen Strom in eine äquivalente Spannung umwandeln.

Die Referenzen können auch als diskrete Verläufe in einem geeigneten Speicher abgelegt sein und mittels eines Mikrocontrollers mit dem gemessenen Strom in der Ausgangsstufe 2 verglichen werden.

Mit den variablen Referenzen wird erreicht, dass das Ansprechverhalten der Schutzmaßnahmen über die gesamte Periode der Netzspannung U_{Netz} gleich bleibt. Es macht dann keinen Unterschied, ob ein Spannungseinbruch in der Nähe eines Nulldurchgangs oder in der Nähe eines Scheitelpunkts erfolgt.

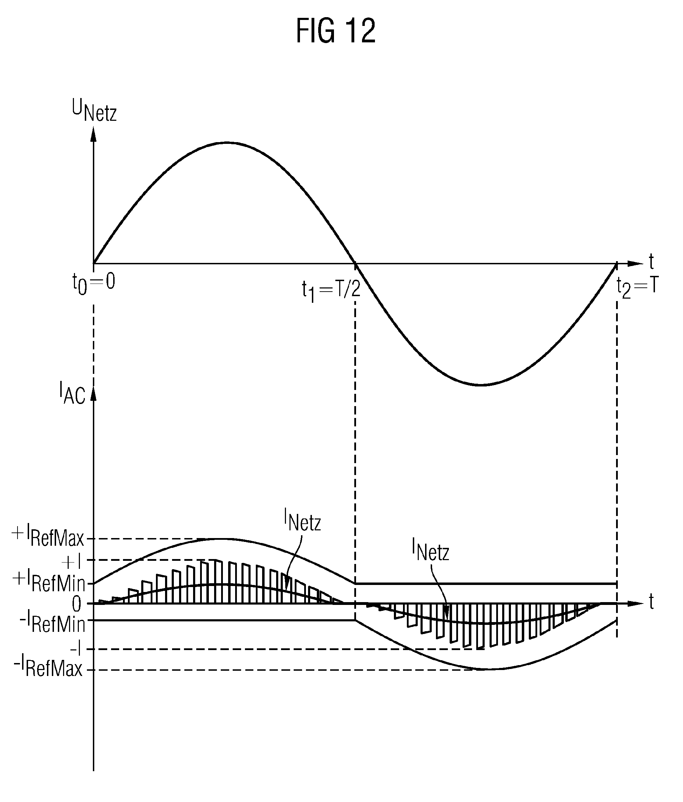

Eine weitere Ausprägung des Verfahrens führt zu einem in Figur 12 dargestellten Verlauf der Ströme und Referenzen. Die Verläufe unterscheiden sich dabei von den in Figur 11 dargestellten dadurch, dass die Leistung durch den Wechselrichter und somit durch die Ausgangsstufe 2 vermindert ist, weil z.B. am Eingang des Wechselrichters weniger Energie aus einer alternativen Energiequelle zur Verfügung steht. Das Auslöseverhalten für die Schutzmaßnahmen wird dabei in der Weise angepasst, dass die maximalen Referenzwerte +I_{Ref Max}, -I_{Ref Max} proportional zur Leistung durch die Ausgangsstufe 2 vermindert werden.

## Patentansprüche

1. Verfahren zur Begrenzung eines durch eine Ausgangsstufe (2) eines Wechselrichters fliesenden Stromes (I_{AC}), wobei die Polarität des Stromes (I_{AC}) im störungsfreien Betrieb mittels in der Ausgangsstufe (2) angeordneter Schaltelemente (S1, S2, S3, S4) abhängig von der Polarität der Netzspannung (U_{Netz}) eines Wechselspannungsnetzes umgeschaltet wird und wobei für den Strom (I_{AC}) eine positive und eine negative Referenz (+I_{Ref}, -I_{Ref}) vorgegeben wird, bei deren Erreichung Schutzmaßnahmen ausgelöst werden, **dadurch gekennzeichnet, dass** während einer positiven Halbwelle der Netzspannung (U_{Netz}) die negative Referenz (-I_{Ref}) herabgesetzt wird und dass während einer negativen Halbwelle der Netzspannung (U_{Netz}) die positive Referenz (+I_{Ref}) herabgesetzt wird.

2. Verfahren nach Anspruch 1, **dadurch gekennzeichnet, dass** für die herabgesetzten Referenzen (+I_{Ref}, -I_{Ref}) geringere Werte als die im störungsfreien Betrieb erreichten Scheitelwerte des Stromes (I_{AC}) am Ausgang der Ausgangsstufe (2) vorgegeben werden.

3. Verfahren nach Anspruch 1 oder 2, **dadurch gekennzeichnet, dass** für die herabgesetzten Referenzen (+I_{Ref}, -I_{Ref}) konstante minimale Referenzwerte (+I_{Ref Min}, -I_{Ref Min}) vorgegeben werden.

4. Verfahren nach Anspruch 1 oder 2, **dadurch gekennzeichnet, dass** für die herabgesetzten Referenzen (+I_{Ref}, -I_{Ref}) variable Verläufe vorgegeben werden.

5. Verfahren nach einem der Ansprüche 1 bis 4, **dadurch gekennzeichnet, dass** während der positiven Halbwelle der Netzspannung (U_{Netz}) für die positive Referenz (+I_{Ref}) ein variabler Verlauf vorgegeben wird und dass währen der negativen Halbwelle der Netzspannung (U_{Netz}) für die negative Referenz (-I_{Ref}) ein variabler Verlauf vorgegeben wird.

6. Verfahren nach Anspruch 5, **dadurch gekennzeichnet, dass** für die variablen Verläufe der Referenzen (+I_{Ref}, -I_{Ref}) Halbsinusfunktionen mit maximalen Referenzwerten (+I_{RefMaX}, - I_{Ref Max}) in Scheitelpunkten der Netzspannung (U_{Netz}) vorgegeben werden.

7. Verfahren nach Anspruch 6, **dadurch gekennzeichnet, dass** die variablen Verläufe der Referenzen (+I_{Ref}, -I_{Ref}) von den Halbwellen der Netzspannung abgeleitet werden oder synchron zum Verlauf der Netzspannung mittels eines Mikrocontrollers erzeugt werden.

8. Verfahren nach einem der Ansprüche 5 bis 7, **dadurch gekennzeichnet, dass** die variablen Verläufe der Referenzen (+I_{Ref}, -I_{Ref}) proportional zur Leistung durch die Ausgangsstufe (2) vorgegeben werden.

9. Verfahren nach einem der Ansprüche 5 bis 8, **dadurch gekennzeichnet, dass** für die positive Referenz (+I_{Ref}) ein Verlauf vorgegeben wird, der während einer negativen Halbwelle der Netzspannung (U_{Netz}) einen minimalen positiven Referenzwert (+I_{Ref Min}) annimmt und der während einer positiven Halbwelle der Netzspannung (U_{Netz}) einer positiven Halbsinusfunktion mit Anfangs- und Endwert gleich dem minimalen positiven Referenzwert (+I_{Ref Min}) folgt und dass für die negative Referenz (-I_{Ref}) ein Verlauf vorgegeben wird, der während einer positiven Halbwelle der Netzspannung (U_{Netz}) einen minimalen negativen Referenzwert (-I_{Ref Min}) annimmt und der während einer negativen Halbwelle der Netzspannung (U_{Netz}) einer negativen Halbsinusfunktion mit Anfangs- und Endwert gleich dem minimalen negativen Referenzwert (-I_{Ref Min}) folgt.
